# EUROPEAN PATENT SPECIFICATION

(11) **EP 0 622 948 B1**
(45) Date of publication and mention of the grant of the patent: **27.11.2002**
(21) Application number: 94202073.6
(22) Date of filing: 26.09.1989
(51) Int. Cl.: H04N 1/40

(54) **Image processing apparatus and method**
Bildverarbeitungsgerät und -verfahren
Dispositif et méthode de traitement d'image

(30) Priority: 27.09.1988 JP 23970888; 05.12.1988 JP 30840988; 26.12.1988 JP 32835288; 27.12.1988 JP 33059188; 23.01.1989 JP 1185189
(43) Date of publication of application: 02.11.1994
(62) Divisional of application: 89309780.8
(73) Proprietor: CANON KABUSHIKI KAISHA, Tokyo (JP)
(72) Inventor: Abe, Makoto, c/o Canon Kabushiki Kaisha, Tokyo (JP); Seto, Kaoru, c/o Canon Kabushiki Kaisha, Tokyo (JP); Kawana, Takashi, c/o Canon Kabushiki Kaisha, Tokyo (JP); Kashihara, Atsushi, Ohta-ku, Tokyo (JP); Mano, Hiroshi, c/o Canon Kabushiki Kaisha, Tokyo (JP); Saito, Tetsuo, c/o Canon Kabushiki Kaisha, Tokyo (JP); Sasame, Hiroshi, c/o Canon Kabushiki Kaisha, Tokyo (JP); Itoh, Michio, c/o Canon Kabushiki Kaisha, Tokyo (JP); Ohkubo, Masaharu, c/o Canon Kabushiki Kaisha, Tokyo (JP); Yamada, Hiromichi, c/o Canon Kabushiki Kaisha, Tokyo (JP); Ojima, Masaki, c/o Canon Kabushiki Kaisha, Tokyo (JP)
(74) Representative: Beresford, Keith Denis Lewis

(56) References cited:
- US-A- 4 698 778
- US-A- 4 782 400
- PATENT ABSTRACTS OF JAPAN vol. 11, no. 138 (E-503) 2 May 1987 & JP-A-61 277 262 (TOSHIBA CORP) 8 December 1986
- PATENT ABSTRACTS OF JAPAN vol. 11, no. 237 (E-528) 4 August 1987 & JP-A-62 049 779 (CANON INC) 4 March 1987

## Description

The present invention relates to a recording apparatus for recording an image on a recording medium on the basis of input data.

As conventional non-impact type printers using an electrophotographic process, a laser printer using a laser diode, an LED printer using a light-emitting diode array as a light source, a liquid crystal printer using a liquid crystal shutter, and the like are known. Of these printers, some laser printers which can change a density of dots of an image to be output can change a dot density using a signal from an external apparatus or a select switch.

However, when a dot density is merely changed, an image is nonuniformly formed or reproducibility of a detailed portion is considerably degraded.

Printers such as a laser printer utilizing an electrophotographic technique process a binary image signal. When these printers output a halftone image, an image signal is subjected to processing such as dither processing by a host computer and is converted to a binary signal before it is input to the printer. As a method of inputting multi-value image data to a laser printer or the like and outputting a halftone image, a method wherein an input image signal is converted to an analog image signal, and the analog image signal is compared with a cyclic analog pattern signal such as a triangular-wave signal, thus generating a pulse-width modulated binary image signal, is proposed (e.g., Japanese Patent Laid-Open (Kokai) No. 62-42693).

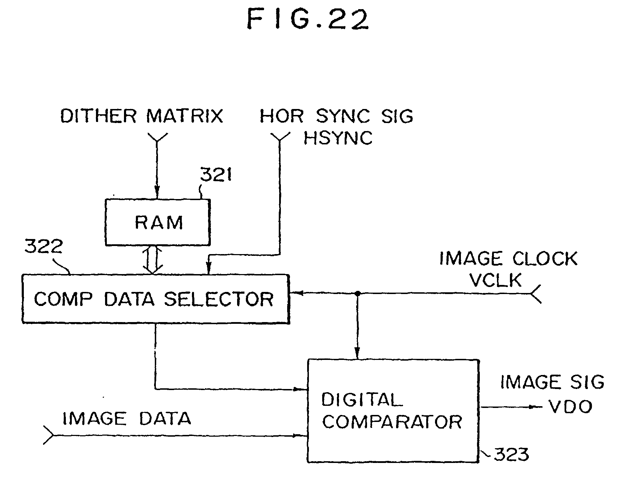

Fig. 22 is a block diagram showing an arrangement of the apparatus according to this method.

Multi-value image data sent from a host computer (not shown) is subjected to digital-to-digital conversion by a D/D converter 202 for density correction, and is then latched by a latch circuit 203 in response to an image clock signal CLK, thus synchronizing timings. The latched image data is converted to an analog signal VA by a D/A converter 204. The analog signal VA is compared by a comparator 205 with a triangular wave having a predetermined period, which is output from a triangular wave generating circuit 219. Thus, the analog signal is converted from a level signal to a time modulation signal, i.e., a pulse-width modulated signal. The pulse-width modulated output from the comparator 205 is input to a laser driver 206, thus driving a laser diode 207.

In conventional apparatus, the resolution of a halftone image (to be referred to as the number of lines) is determined in accordance with the obtainable resolution of the printer.

However, when an output image of a printer is used as a block copy of a printing apparatus, the number of lines may often be changed from 50 to 100 in light printing, 125 to 200 in high-quality printing, or in accordance with the choice of the user.

When the host computer performs dither processing and the printer outputs an image, the host computer may change the matrix pattern used in the dither processing to change the number of lines. In this case, however, some printers have different correspondences between dither patterns and densities. Even if the same dither pattern is input, one printer may output a hard halftone image, and another printer outputs a soft halftone image. Even in a given printer, when the number of lines is changed, the halftone image density may vary.

At the same time, along with development of host computers or controllers for controlling the printing apparatus, various processing operations are available in halftone reproduction.

For example, when a halftone image is obtained as a hard copy, an area gradation method based on a dither method or the like is widely used at present.

In this method, a pixel density of a printer apparatus is set to be, e.g., 300 dpi, an 8 x 8 (pixel) matrix is formed, and pixels in the matrix are printed according to image data so as to express gradation. In this case, the number of lines upon halftone reproduction is 37.5 lines per inch, and the number of gradation levels is 64. The number of lines and the the number of gradation levels are not limited to the above numerical values but various other values may be employed according to necessity of an operator. For example, 75 lines and 16 gradation levels can be realized by a 4 x 4 (pixel) matrix.

Dither methods are classified into clustered dot or dispersed dot types depending on the way in which pixels are filled.

Figs. 28A and 28B exemplify 4 x 4 (pixel) dither matrices and dot patterns. Fig. 28A shows a sample of the dispersed type method, and Fig. 28B shows a sample of the clustered type method. In Figs. 28A and 28B, numerical values indicate the order of forming dots. The number of dots is increased in turn from low-density data on the basis of a predetermined threshold value.

In the conventional technique, however, only one dot pattern is prepared for one 8 x 8 (pixel) or 4 x 4 (pixel) matrix, and no countermeasure is taken for selecting a printing density of a printer engine. Thus, the following drawbacks are posed.

For example, in a printer in which a printer engine has two printing densities of 300 dpi and 600 dpi, and a 4 x 4 dither matrix is used, when the printing density is switched from 300 dpi to 600 dpi to express gradation while the 4 x 4 dither matrix remains the same, the number of lines is doubled, and a finer expression is allowed. However, at gradation level "1", i.e., when a dot is formed on one pixel in the matrix, since reproducibility per pixel is degraded due to the doubled number of lines, it is difficult to express this gradation level, and a completely blank portion is formed.

In contrast to this, at gradation level "15", i.e., when only one blank pixel is formed among black pixels, since its reproducibility is low, a resultant image is in solid black.

For this reason, the number of gradation levels to be reproduced is decreased, and an image having high black-and-white contrast, i.e., having a so-called steep gamma curve is undesirably obtained.
The present invention is concerned with meeting this problem.

In Patent Abstracts of Japan, vol. 11, no. 138 (E-503) 2 May 1987 & JP-A-61 277 262 (Toshiba Corp) 8 December 1986, and Patent Abstracts of Japan vol. 11, no. 237 (E-528) 4 August 1987 & JP-A-62 049 779 (Canon Inc) 4 March 1987, there is described laser printers in which resolution can be changed by changing scanning speed.

U.S. Patent No. US-A-4,782,400 discloses a facsimile apparatus in which a dither matrix is selected in accordance with the scan density of a reader. Thus in the apparatus a selected one of many dither matrices of similar size (n × n) is used to generate a half tone image. This dither matrix selection between similar sized matrices is based purely on the required output resolution.

United States Patent Specification No. US-A-4698778 discloses using a mother matrix pattern from which child patterns are extracted in accordance with required magnification in the final image and is thus not concerned with output resolution changes.

In accordance with a first aspect of the invention there is provided an image processing apparatus as set out in claim 1.

In accordance with a second aspect of the invention there is provided an image processing method as set out in claim 6.

The present invention can be more clearly understood from the following description of preferred embodiments taken in conjunction with the accompanying drawings, in which:
Fig. 1 is a diagram showing a principal arrangement of a laser printer according to a first embodiment of the present invention;
Fig. 2 is a circuit diagram of a controller 30;
Fig. 3 is a circuit diagram of a high voltage source (HVS) 26;
Fig. 4 is a circuit diagram of a high voltage source 28;
Fig. 5 is a circuit diagram of a high voltage source 27;
Fig. 6 is a circuit diagram of a temperature control circuit;
Fig. 7 is a diagram of a feed motor control circuit;
Fig. 8 is a diagram of a laser beam printer having a dot density select function;
Fig. 9 is a control flow chart;
Fig. 10 is a block diagram of another arrangement of control circuits;
Fig. 11 is a circuit diagram showing an arrangement of a scanner driver;
Fig. 12A is a chart showing a drum surface voltage obtained when proper exposure is made at 600 dpi;
Fig. 12B is a chart showing a drum surface voltage obtained when proper exposure is made at 300 dpi;
Figs. 13A and 13B are graphs showing the relationship among a drive current, an intensity, and an intensity distribution;
Figs. 14A and 14B are charts showing the intensity distribution shown in Fig. 13B;

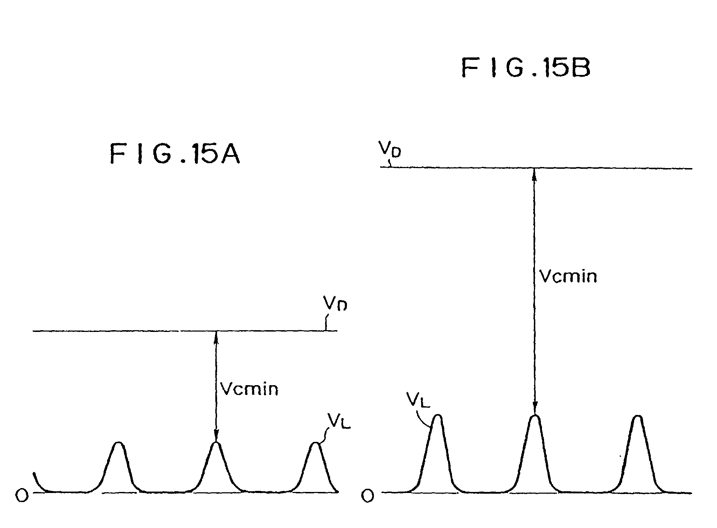

Figs. 15A and 15B are charts showing a drum surface voltage obtained when exposure is performed with different dark voltages;

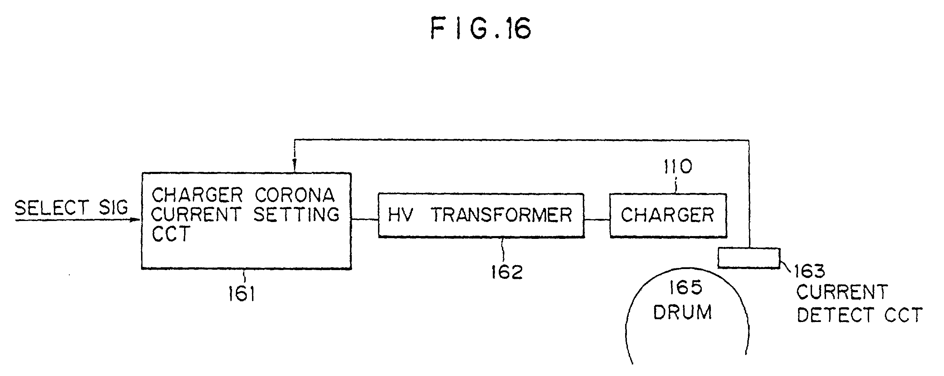

Fig. 16 is a block diagram for explaining drum surface voltage control;
Fig. 17 is a block diagram showing a signal processing system of a laser printer according to a third embodiment of the present invention;
Figs. 18-1 to 18-3 are graphs showing conversion characteristics of three D/D converters in the third embodiment;
Fig. 19 is a timing chart showing the relationship among an analog signal VA, a triangular wave signal SW, and a pulse-width modulated signal PW when the number of lines is 150 lines and 75 lines in a 300-dpi printer of the third embodiment;
Fig. 20 is a block diagram showing a signal processing system of a laser printer according to the present invention;
Fig. 21 is a block diagram showing an arrangement of the present invention;
Fig. 22 is a block diagram showing an arrangement of an image data process circuit shown in Figure 21;

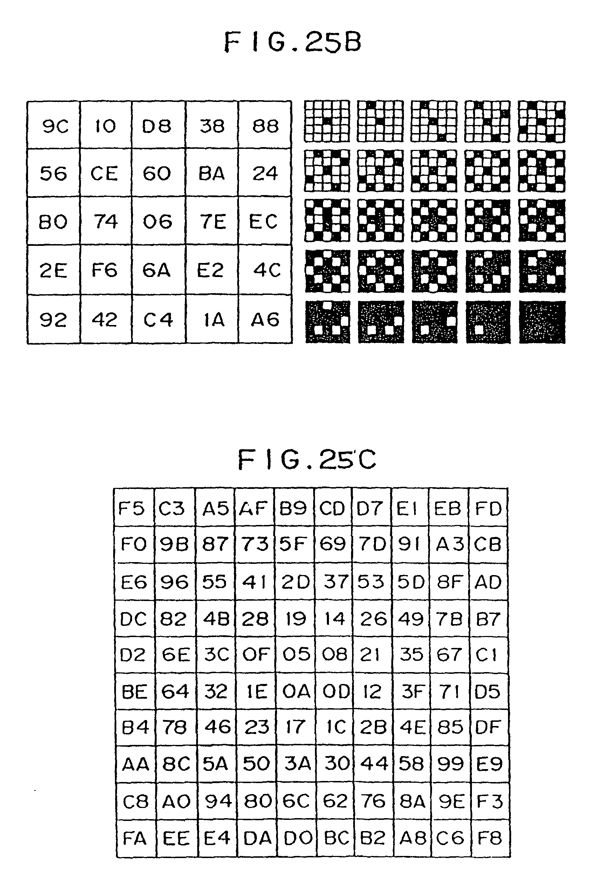

Figs. 23A and 23B show dither matrices selected in the arrangement of Figure 22 in which Fig. 25A shows a dither matrix at a printing density of 300 dpi and Fig. 25B shows a dither matrix at a printing density of 600 dpi;
Fig.23C shows a transition state of printing dot patterns based on the dither matrix shown in Fig. 23A;
Fig. 23D shows a transition state of printing dot patterns based on the dither matrix shown in Fig. 23B;
Fig. 24 is a block diagram showing another embodiment of the present invention;
Fig. 25A shows a dither matrix selected when a printing density is 300 dpi and the number of lines is 60, and a transition state of printing dot patterns in the seventh embodiment;
Fig. 25B shows a dither matrix selected when a printing density is 600 dpi and the number of lines is 120, and a transition state of printing dot patterns in the seventh embodiment;
Fig. 25C shows a dither matrix selected when a printing density is 600 dpi and the number of lines is 60, and a transition state of printing dot patterns in the seventh embodiment;

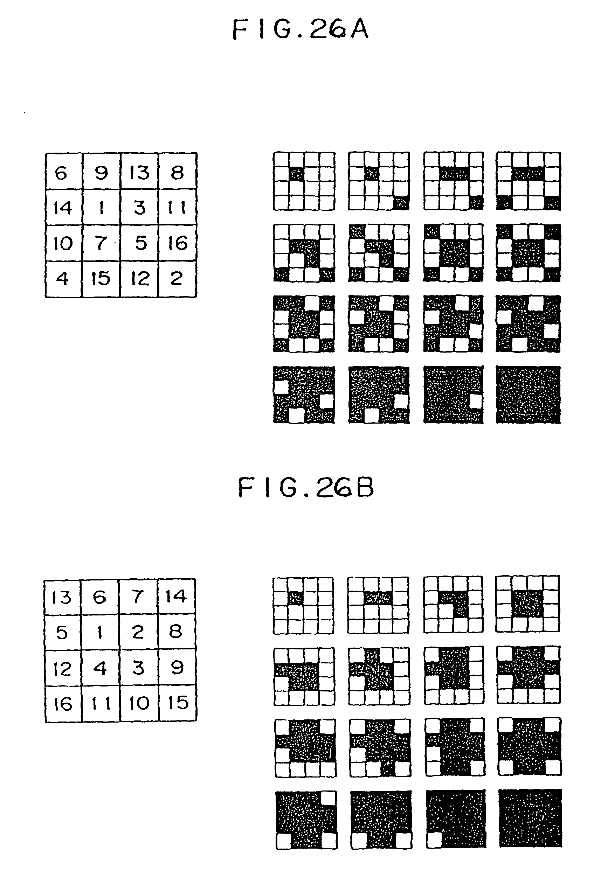

Figs. 26A and 26B show typical dither matrices and transition states of printing dot patterns, in which Fig. 26A exemplifies a dispersed type method and Fig. 26B exemplifies a clustered type method.

### DETAILED DESCRIPTION OF THE PREFERRED EMBODIMENTS:

Preferred embodiments of the present invention will now be described with reference to the accompanying drawings.

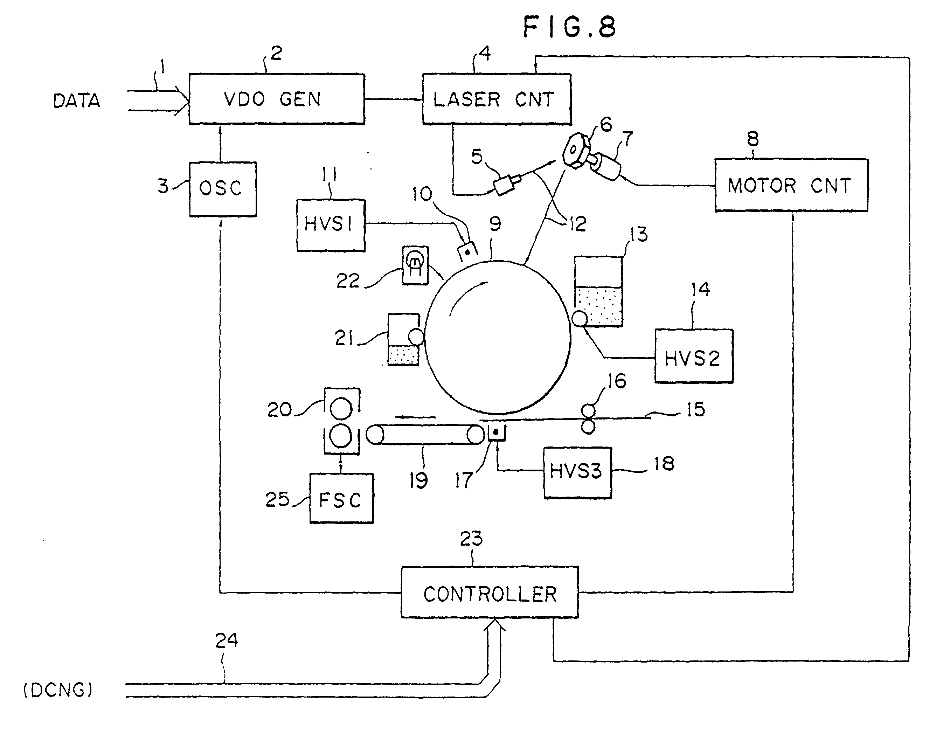

Fig. 8 shows an arrangement of a laser printer capable of selecting a dot density. Image data 1 sent from an external apparatus is input to a video generator (VDO GEN) 2. The video generator 2 develops the image data 1 into a bit map (not shown) on the basis of a block signal (image clock) sent from an oscillator (OSC) 3 to generate a video signal as a modulation signal for a laser diode 5, and supplies it to a laser control circuit (LASER CNT) 4.

The oscillation frequency of the oscillator 3 is switched in accordance with a control signal sent from a controller 23. Therefore, the maximum frequency of the video signal can be switched.

The laser control circuit 4 modulates a drive current of the laser diode 5 using the video signal, and switches a laser light amount on the basis of a control signal from the controller 23.

A modulated laser beam 12 is reflected by a rotary polygon mirror 6, and raster-scans the surface of a photosensitive drum 9.

The rotary polygon mirror 6 is rotated at a constant speed by a motor 7 which is arranged on a line extending from the rotary polygon mirror 6, and a motor control circuit (MOTOR CNT) 8.

The motor control circuit 8 selects rotations of the rotary polygon mirror 6 in accordance with the control signal sent from the controller 23.

An image forming operation based on an electrophotographic process using the laser light source will be described below.

A primary charger 10 performs positive corona discharge on the basis of a voltage supplied from a high voltage source (HVS1) 11, and uniformly and positively charges the surface of the photosensitive drum 9. The photosensitive drum 9 is rotated at a constant speed, as indicated by an arrow, and a latent image is formed on the surface by the modulated laser beam 12. The latent image is developed with a developing agent, e.g., a toner by a developing device 13. Furthermore, a developing cylinder for causing the toner to be attached to the surface of the photosensitive drum 9 is arranged in the developing device 13 adjacent to the surface of the photosensitive drum 9. An electric field is generated in a developing section based on a voltage supplied from a high voltage source (HVS2) 14, and the latent image is then developed with the toner. A visible image formed on the photosensitive drum is transferred by a transfer charger 17 onto a transfer sheet 15 conveyed by convey rollers 16.

The transfer charger 17 performs negative corona discharge on the basis of a voltage supplied from a high voltage source (HVS3) 18, and causes the toner on the surface of the photosensitive drum 9 to become attached to the transfer sheet 15.

The transfer sheet 15 on which an image is formed is fed to a fixing device 20 by a conveyor belt 19. A pair of rollers (to be referred to as fixing rollers hereinafter) arranged in the fixing device 20 are controlled to a constant temperature by a heater (not shown-) and a fixing temperature control circuit 25. When the transfer sheet 15 passes through a gap between the fixing rollers, the toner is thermally fixed on the transfer sheet 15, thus completing a print operation. After the transfer operation, the toner remaining on the surface of the photosensitive drum 9 is cleaned by a cleaner 21. The photosensitive drum 9 is then initialized by an exposure lamp 22.

Dot density select control with the above arrangement will be described below. The controller 23 starts control upon reception of dot density select data from an external apparatus. The dot density select data is obtained by receiving a dot density command (DCNG) through an interface bus 24 with an external apparatus.

When the command is received, control signals according to a dot density are supplied to the oscillator 3, the laser control circuit 4, and the motor control circuit 8, thus completing dot density selection.

A further improved apparatus of the apparatus shown in Fig. 8 will be described below.

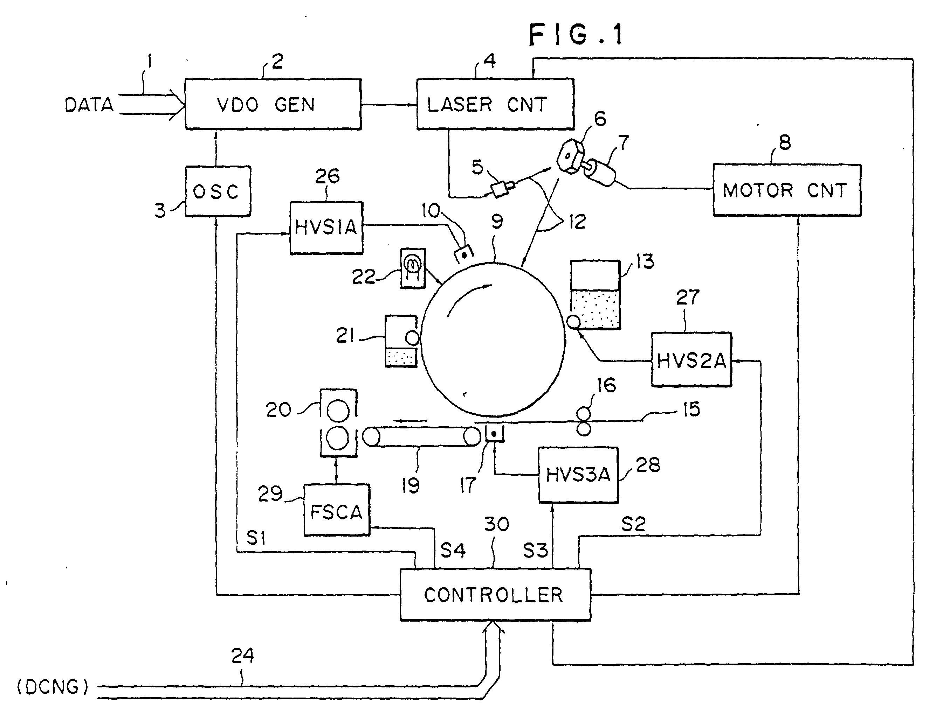

Fig. 1 shows the principal arrangement of a laser printer. Note that the same reference numerals in Fig. 1 denote the same parts as in Fig. 8.

A high voltage source 1A (to be abbreviated to as an HVS1A hereinafter) changes a charge amount of a photosensitive body. The HVS1A (26) supplies a high voltage to a primary charger 10 to cause it to perform corona discharge, thereby uniformly charging the photosensitive drum 9. The HVS1A (26) switches a voltage to be generated in accordance with a control signal S1 from a controller 30.

A high voltage source 2A (to be abbreviated to as an HVS2A hereinafter) constitutes a means for changing a bias voltage to be applied to a developing sleeve. The HVS2A (27) applies a bias voltage to the developing sleeve of a developing device 13 to perform development of an image on the photosensitive drum 9 using a developing agent. The HVS2A (27) switches a voltage to be generated in accordance with a control signal S2 from the controller 30.

A high voltage source 3A (to be abbreviated to as an HVS3A hereinafter) constitutes a means for changing a corona discharge amount for a transfer operation. The HVS3A (28) supplies a high voltage to a transfer charger 17 to transfer a toner image onto a transfer sheet 15. The HVS3A (28) switches a voltage to be generated in accordance with a control signal S3 from the controller 30.

A temperature control circuit (to be abbreviated to as an FSCA hereinafter) 29 constitutes a means for changing a temperature at which a developing agent is thermally fixed on the transfer sheet. The FSCA 29 detects a temperature of the fixing rollers of a fixing device 20, and controls them to a predetermined temperature using a heater. The FSCA 29 switches a temperature to be controlled in accordance with a control signal S4 from the controller 30.

The controller 30 outputs the control signals S1 to S4 upon reception of a dot density command (DCNG) from an external apparatus (not shown) such as a host computer through a data bus 24.

The control means described above will be described in more detail below.

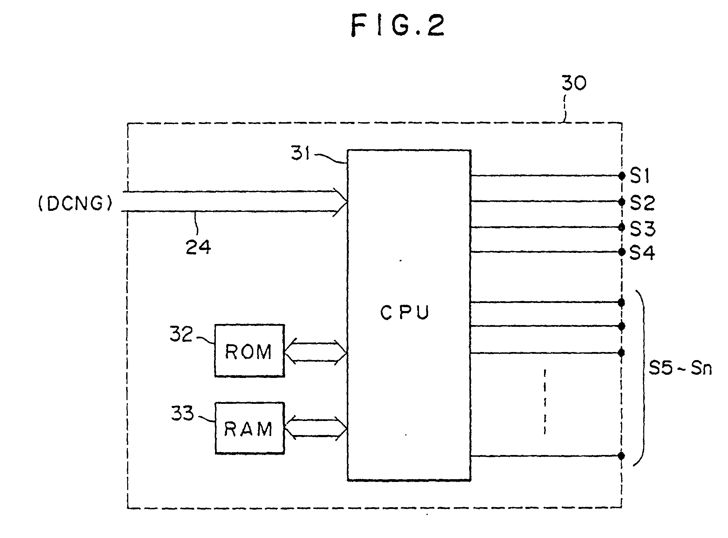

Fig. 2 is a block diagram showing an arrangement of the controller 30. A microcomputer (to be abbreviated to as a CPU hereinafter) 31 comprises a ROM 32 for storing programs, and a RAM 33 for temporarily storing data, and executes control. When the CPU 31 receives the dot density command DCNG through the data bus 24, it outputs the control signals S1 to S4 in accordance with the dot density. The CPU 31 also outputs control signals S5 to Sn used for other control operations, e.g., a drive operation of the photosensitive drum 9.

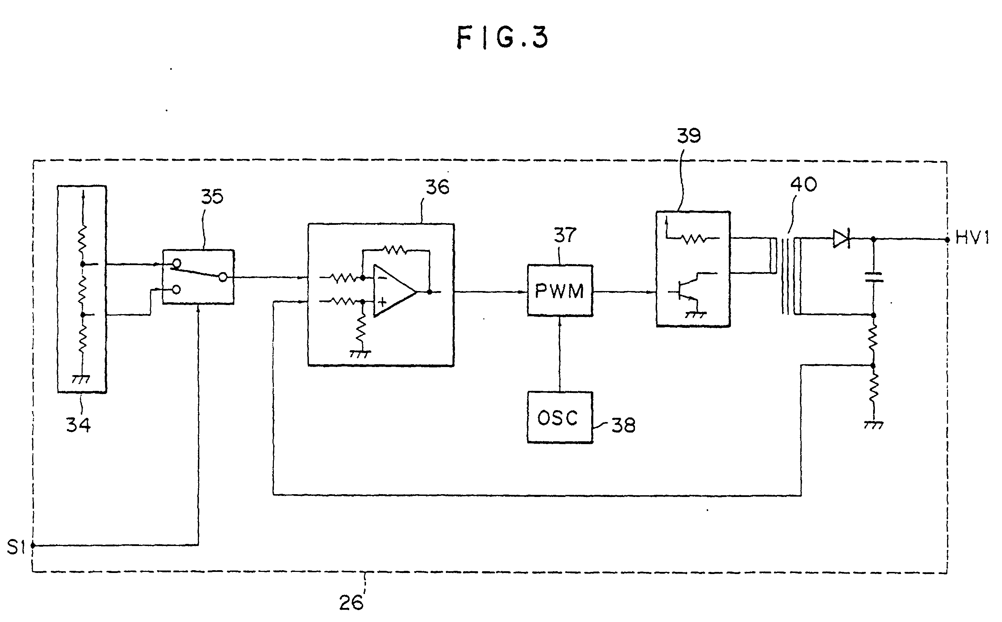

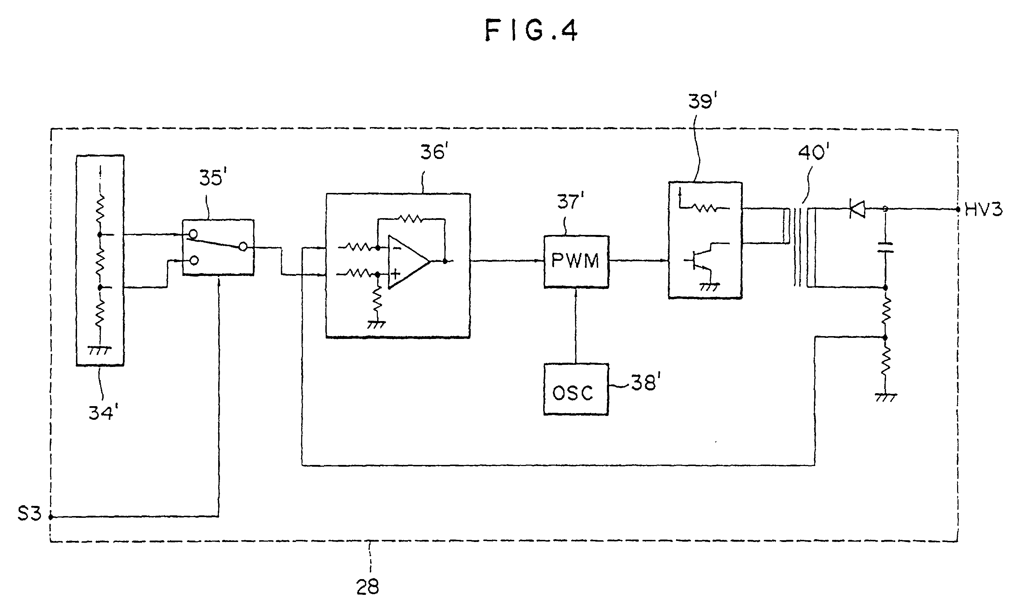

Fig. 3 is a block diagram showing an arrangement of the HVS1A (26). Fig. 4 is a block diagram showing an arrangement of the HVS3A (28). Since the HVS1A (26) and the HVS3A (28) perform substantially the same operation although high voltages to be output have opposite polarities, the HVS1A (26) shown in Fig. 3 will be described here.

In Fig. 3, a reference voltage generator 34 generates two different voltages.

A switch circuit 35 supplies one of the two reference voltages sent from the reference voltage generator 34 to the inverting input terminal of a differential amplifier 36 in accordance with the control signal S1. The non-inverting input terminal of the differential amplifier 36 receives a feedback signal of a primary charging high voltage HV1. According to the two inputs, the output voltage of the differential amplifier 36 is determined, and is input to a pulse-width modulator (PWM) 37.

An oscillation output of an oscillator (OSC) 38 is input to the pulse-width modulator 37. A pulse width of the oscillation output is determined by the modulator 37 in accordance with the output voltage of the differential amplifier 36, and is input to a drive circuit 39. The drive circuit 39 is connected to the primary winding of a high-voltage transformer 40, and causes the secondary winding of the high-voltage transformer 40 to generate a high voltage on the basis of the modulated pulse. The secondary winding output of the high-voltage transformer 40 is rectified and smoothed, thus supplying the high voltage HV1 to the primary charger 10.

Since a corona current in the primary charger 10 is fed back to the non-inverting input terminal of the differential amplifier 36 through a resistor, it is kept constant in accordance with the reference voltage of the reference voltage generator 34. Therefore, when the switch circuit 35 is switched in accordance with the control signal S1, the charge amount of the primary charger 10 can be switched.

The HVS3A shown in Fig. 4 has a polarity different from that of the HVS1A described above. A reference voltage generator 34' performs the same operation as in the generator 34 in Fig. 3. A switch circuit 35' performs the same operation as the switch circuit 35; a differential amplifier 36', 36; a pulse-width modulator 37', 37, an oscillator 38', 38; a drive circuit 39', 39; and a high-voltage transformer 40', 40. The polarity of a rectification diode for the secondary winding output of the high-voltage transformer 40' is inverted (that is, a high voltage HV3 is generated), so that the high voltage HV3 having a polarity opposite to that of the circuit shown in Fig. 3 is generated. The HVS3A switches a corona current of the transfer charger 17 in accordance with the control signal S3 in the same manner as in the HVS1A.

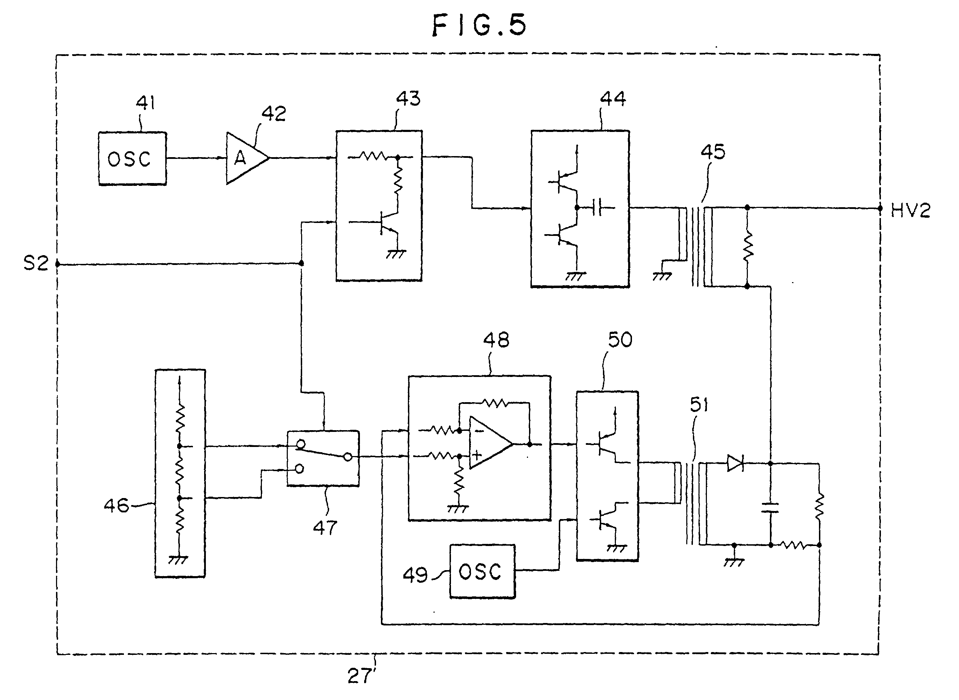

Fig. 5 is a block diagram showing an arrangement of the HVS2A (27) for supplying a bias voltage HV2 to the developing sleeve of the developing device 13. The bias voltage HV2 is generated by synthesizing output voltages from an AC voltage generating section with a DC voltage generating section. The AC voltage generating section comprises an oscillator 41, an amplifier 42, an attenuator circuit 43, a drive circuit 44, and a high-voltage transformer 45.

The oscillation output from the oscillator 41 is amplified by the amplifier 42. The attenuator circuit 43 switches a voltage level of the amplified oscillation output in accordance with the control signal S2. The oscillation output passing through the attenuator circuit 43 is input to the drive circuit 44 to oscillate the high-voltage transformer 45 connected to the drive circuit 44. Thus, an AC voltage appears at the secondary winding of the high-voltage transformer 45. Since the voltage level of the oscillation output passing through the attenuator circuit 43 is switched in accordance with the control signal S2, the level of the AC voltage generated by the high-voltage transformer 45 is switched.

The DC voltage generating section comprises a reference voltage generator 46, a switch circuit 47, a differential amplifier 48, an oscillator 49, a drive circuit 50, and a high-voltage transformer 51.

The reference voltage generator 46 generates two different voltages. The switch circuit 47 supplies one of the two reference voltages sent from the reference voltage generator 46 to one input terminal of the differential amplifier 48. The other input terminal of the differential amplifier 48 receives a feedback signal of the voltage generated by the high-voltage transformer 51. According to the two inputs, the output voltage of the differential amplifier 48 is determined. The drive circuit 50 for the high-voltage transformer 51 causes the high-voltage transformer 51 to oscillate on the basis of the oscillation output of the oscillator 49. The drive circuit 50 controls the primary current of the high-voltage transformer 51 and causes it to generate a secondary winding output voltage.

The secondary winding output of the high-voltage transformer 51 is rectified and smoothed to be converted to a DC voltage. The DC voltage is voltage-divided by a resistor, and becomes a feedback signal to the differential amplifier 48. Thus, a constant output voltage is kept in accordance with the reference voltage from the reference voltage generator 46. Therefore, when the switch circuit 47 is switched in accordance with the control signal S3, the level of the DC voltage generated by the high-voltage transformer 51 is switched.

The AC voltage generated by the high-voltage transformer 45 and the DC voltage are added to be the bias voltage HV2. The voltage level of the bias voltage HV2 is switched by the control signal S2.

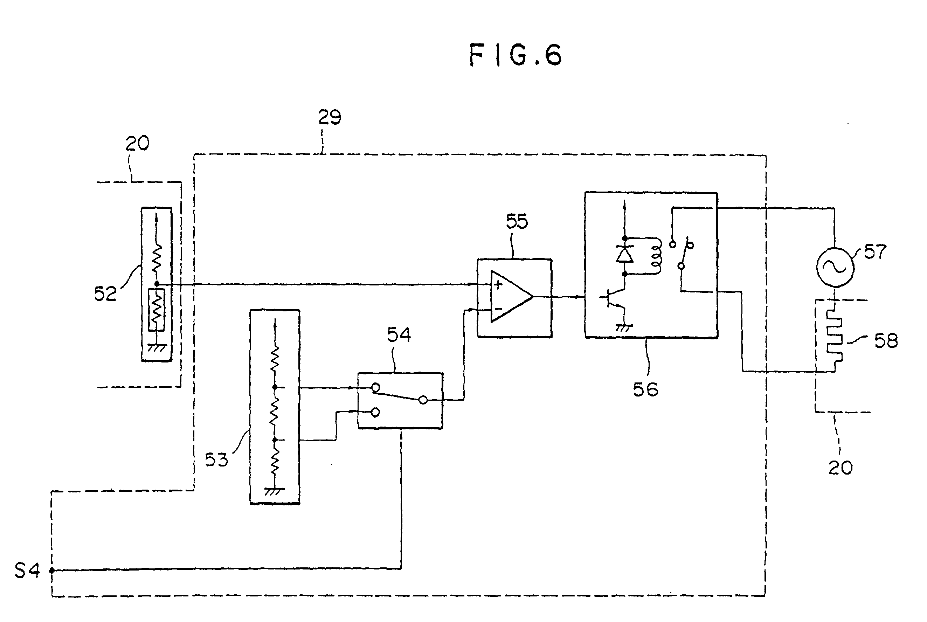

Fig. 6 is a block diagram showing an arrangement of the FSCA 29. A temperature sensor 52 is arranged in the fixing device 20, and comprises a resistor and a thermistor. Since the resistance of the thermistor changes depending on a fixing temperature, a voltage-divided output voltage level also changes. The output voltage of the temperature sensor 52 is input to a comparator 55. The other input terminal of the comparator 55 receives a reference voltage generated by a reference voltage generator 53 and selected by a switch circuit 54. The reference voltage is compared with the output voltage of the temperature sensor 52.

A relay circuit 56 is operated in accordance with the output result of the comparator 55 to supply an AC voltage 57 to a halogen heater 58 arranged in the fixing device 20. Thus, the fixing temperature is kept constant at a point where the output voltage of the temperature sensor 52 coincides with the reference voltage of the reference voltage generator 53. Therefore, when the switch circuit 54 is switched by the control signal S4, the fixing temperature is changed.

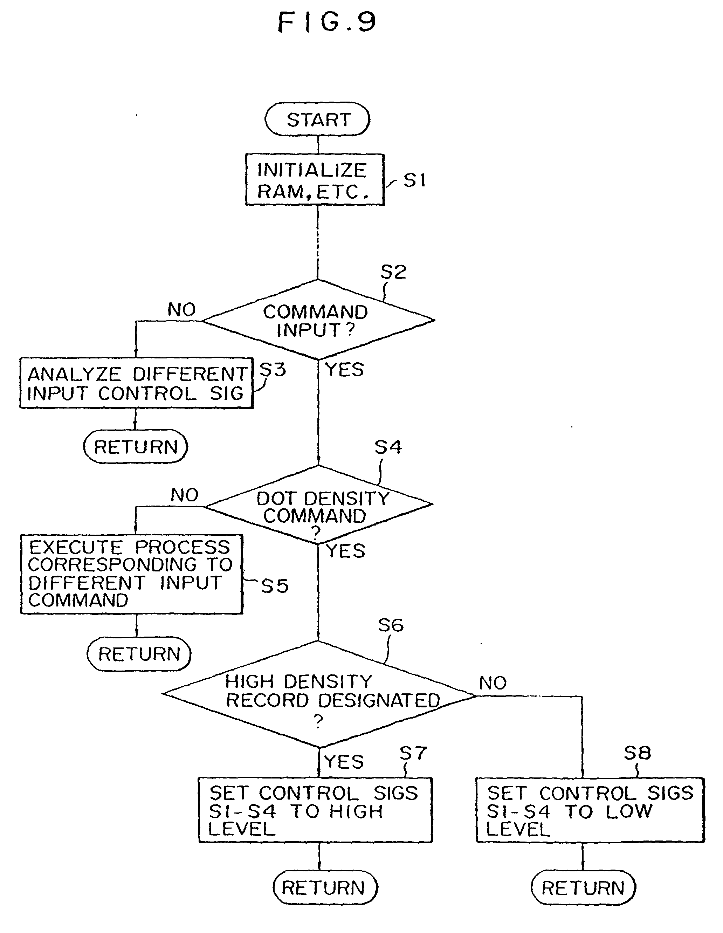

The control operation executed by the CPU 31 will be described below with reference to the flow chart of Fig. 9. Note that the program of the flow chart shown in Fig. 9 is stored in the ROM 32.

When the program starts, the CPU 31 initializes the RAM 33, and the like in step S1. Thereafter, the CPU 31 exchanges data with the external apparatus to check if command data is input from the external apparatus (step S2). If NO in step S2, the flow advances to step S3, and the CPU 31 executes an analysis operation of an input control signal, and the like. If YES in step S2, the flow advances to step S4 to check if the input command data is a dot density command (DCNG). If NO in step S4, the flow advances to step S5, and the CPU executes processing corresponding to the input command data. If YES in step S4, i.e., if the input command data is the dot density command and designates a high-density recording mode, the flow advances to step S7; if it designates a low-density recording mode, the flow advances to step S8. In step S7, the control signals S1 to S4 are set at HIGH level to set select terminals of the switch circuits 35, 35', 47, and 54. More specifically, the select terminal of the switch circuit 35 is set to increase a discharge amount of the primary charger 10. The select terminal of the switch circuit 35' is set to decrease a corona current of the transfer charger 17. Furthermore, the select terminal of the switch circuit 47 is set to decrease the bias voltage to be applied to the developing sleeve. The select terminal of the switch circuit 54 is set to increase a temperature of the fixing rollers.

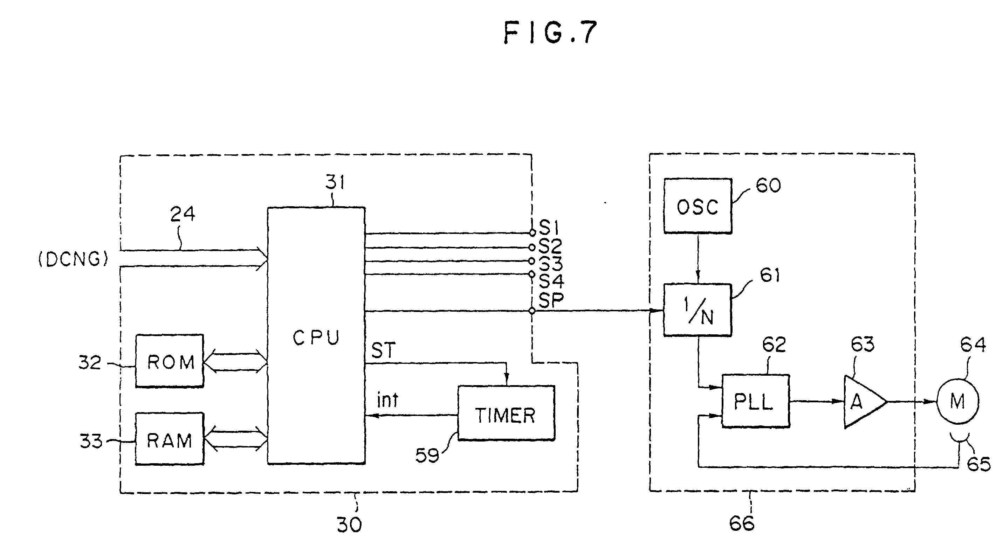

In step S8, the control signals S1 to S4 are set at LOW level to set the select terminals of the switch circuits 35, 35', 47, and 54 in a state opposite to that in Fig. 7. As a result, the discharge amount of the primary charger 10 is decreased and the corona current of the transfer charger 17 is increased as compared to those in the high-density recording mode. Furthermore, the bias voltage is increased, and the temperature of the fixing rollers is decreased. In this case, when the high-density recording mode is designated, the CPU 31 supplies the control signals to the oscillator 3, the laser control circuit 4, and the motor control circuit 8, switches the frequency of an image clock to the high-frequency side, and decreases the drive current of the laser, thereby decreasing a laser beam amount. Furthermore, the CPU switches the rotational speed of the rotary polygon mirror to a high speed. When the low-density recording mode is designated, the CPU switches the frequency of the image clock to the low-frequency side, and increases the laser amount as compared to those in the high-density recording mode. Furthermore, the CPU switches the rotational speed of the rotary polygon mirror to a low speed.

Note that in this printer control is made while the rotational speed of the photosensitive drum 9, i.e., a printing speed of the transfer sheet 15 is fixed. However, a means for changing the printing speed may be combined.

Fig. 7 is a block diagram showing the means for changing the printing speed. The same reference numerals in Fig. 7 denote the same parts as in other drawings. A convey motor 64 serves as a power source for the photosensitive drum 9, the convey rollers 16, the conveyor belt 19, and the like in Fig. 1, and is rotated at a constant speed under the control of a convey motor control circuit 66.

An oscillation output of an oscillator 60 is frequency-divided by a frequency divider 61. The oscillation output which is frequency-divided by the frequency divider 61 is input to a PLL circuit 62 as a reference signal. The PLL circuit 62 receives an output signal from a rotation sensor 65 for generating a pulse signal in accordance with the rotational speed of the convey motor 64. The PLL circuit 62 performs phase control and frequency control based on the input signals to keep constant the rotational speed of the convey motor 64 through an amplifier 63 connected to the output terminal of the PLL circuit 62.

The frequency divider 61 changes a frequency-division ratio in accordance with a control signal SP supplied from the controller 30. Therefore, when the frequency of the reference signal input to the PLL circuit 62 changes, the rotational speed of the convey motor 64 also changes. The CPU 31 simultaneously changes an interrupt period of a timer interrupt circuit 59 used for sequence control in response to a control signal ST, thereby changing the sequence control.

Note that the frequency divider 61 sets the frequency-division ratio to decrease the speed of the convey motor 64 in the high-density recording mode; sets it to increase the speed of the motor 64 in the low-density recording mode as compared to that in the high-density recording mode.

As described above, the means for changing the printing speed can be easily combined to further improve printing quality, as a matter of course.

As described above, a laser beam printer which employs an electrophotographic process and can change a dot density of a light source to be radiated on a photosensitive body on the basis of external data, comprises a means for changing a charge amount uniformly given to the photosensitive body, a means for changing a bias voltage to be applied to a developing sleeve, a means for changing a corona discharge amount for transferring a developing agent onto a transfer sheet, and a means for changing a temperature for fixing the developing agent on the transfer sheet. Thus, charging, developing, transferring, and fixing conditions can be controlled to optimal values in accordance with a dot density, and even if the dot density is switched, a high-quality print-out can always be obtained.

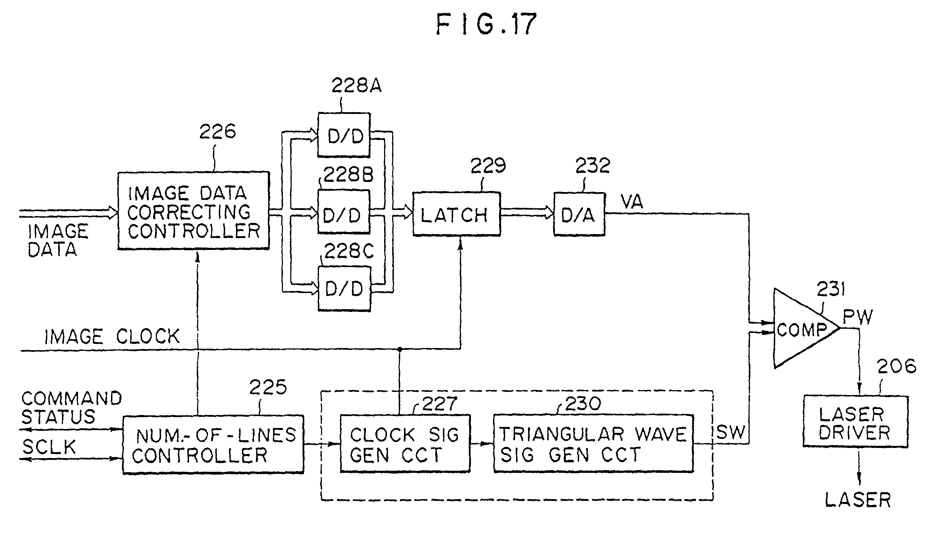

Fig. 17 is a block diagram showing a signal processing system of a laser printer.

This signal processing system receives 8-bit image data, an image clock, a command status signal including a command for designating the number of lines of an image, and a serial clock (SCLK) used for fetching a command from a host computer (not shown).

For example, assuming that a printing density of this laser printer is 300 dpi and the number of lines (representing a resolution of an image to be printed) designated by the command is 150, an image clock is a clock corresponding to pixels at 300 dpi, and a number-of-lines controller 225 notifies to an image data correcting controller 226 and a clock signal generating circuit 227 that the designated number of lines is 150.

The image data correcting controller 226 selects a first D/D converter 228A for performing density correction suitable for a 150-line image output of this printer. 8-bit image data is digital-to-digital converted, and is latched by a latch circuit 229 on the basis of an image block to synchronize timings.

The image data correcting controller 226 can comprise a simple selection switch which is operated in accordance with an output signal from the number-of-lines controller 225. For example, the image data correcting controller 226 may be arranged to select a data bus of image data in accordance with the output signal from the number-of-lines controller 225, so that image data is output to one of first, second, and third D/D converters.

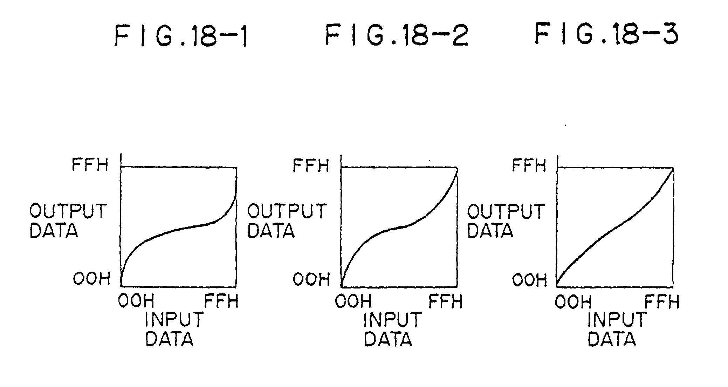

Second and third D/D converters 228B and 228C have density correction tables different from that of the first D/D converter 228A. If the D/D converters 228A, 228B, and 228C are used for 150 lines, 75 lines, and 32.5 lines, respectively, their density correction characteristics are as shown in Figs. 18-1 to 18-3. More specifically, the D/D converters 228A, 228B, and 228C have different output data curves with respect to predetermined input data.

The clock signal generating circuit 227 which received the number-of-lines designating signal indicating 150 lines from the number-of-lines controller 225 sends a clock obtained by frequency-dividing the image clock by 2 to a triangular wave signal generating circuit 230. The triangular wave signal generating circuit 230 integrates the input clock signal, and supplies a triangular wave signal SW having a period corresponding to two 300-dpi pixels to a comparator 231. Note that the clock signal generating circuit 227 comprises a frequency divider for frequency-dividing the image clock in accordance with the output signal from the number-of-lines controller 225.

Meanwhile, the 8-bit image data latched by the latch circuit 229 is converted to a 256-level analog signal VA by a D/A converter 232. The analog signal VA is compared with the triangular wave signal SW by the comparator 231, and is converted from a level signal to a time-modulation signal, i.e., to a pulse-width modulation signal PW. The signal PW is supplied to a laser driver 206.

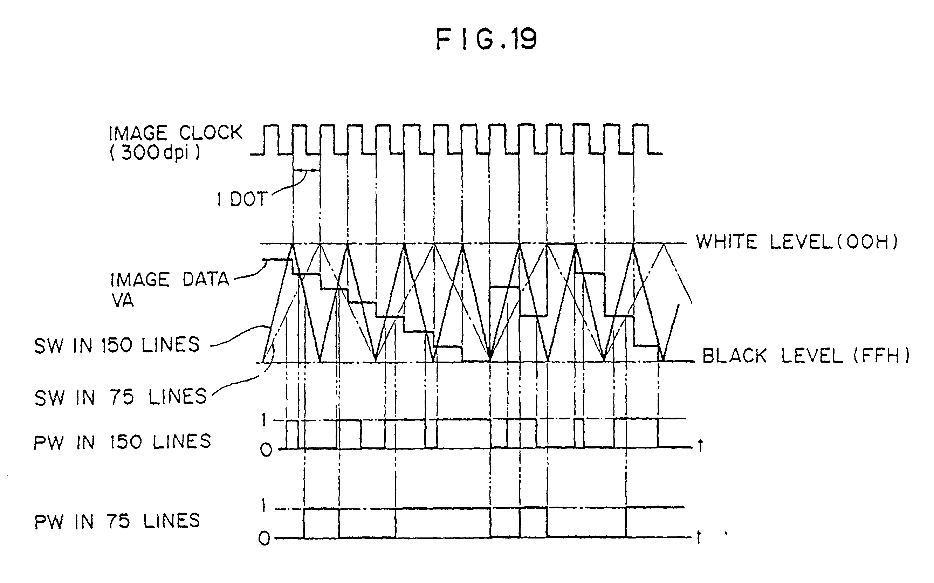

. Fig. 19 is a chart showing the relationship among the analog signal VA, the triangular wave signal SW, and the pulse-width modulation signal PW when the numbers of lines correspond to 150 and 75 in a printer of 300 dpi. In 150 lines, two pixels correspond to one period of the triangular wave signal, and in 75 lines, four pixels correspond to one period of the triangular wave signal.

For common image data, different pulse-width modulation signals PW are generated in accordance with triangular wave signals SW based on the different numbers of lines.

In this printer, the three D/D converters 228A, 228B, and 228C corresponding to three types of number of lines are provided for density correction of image data. In order to cope with many types of number of lines, for example, a large number of density correction tables are stored in a ROM, the correction table according to the designated number of lines is loaded in a RAM, and density correction may be made on the basis of the loaded correction table. Many types of number of lines can be coped with upon combination of frequency dividers in the clock signal generating circuit 227.

In the arrangement being described, the analog type pulse-width modulation processing has been described wherein digital image data is converted to analog image data and the analog data is compared with a triangular wave signal. However, if an up/down counter is used in place of the triangular wave generating circuit, digital type pulse-width modulation processing wherein output data from the up/down counter is compared with D/D-converted digital data by a comparator may be applied to halftone reproduction.

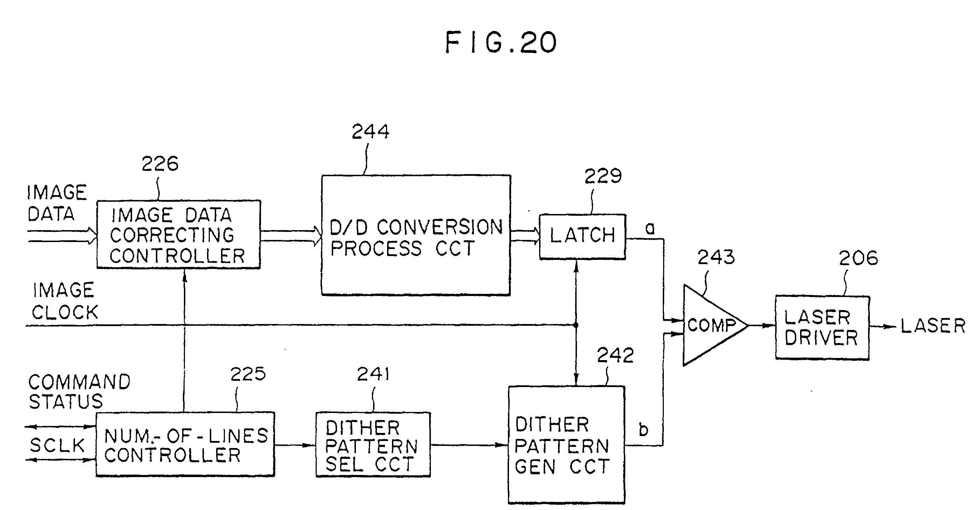

Fig. 20 is a block diagram showing a signal processing system of a laser printer according to the present invention.

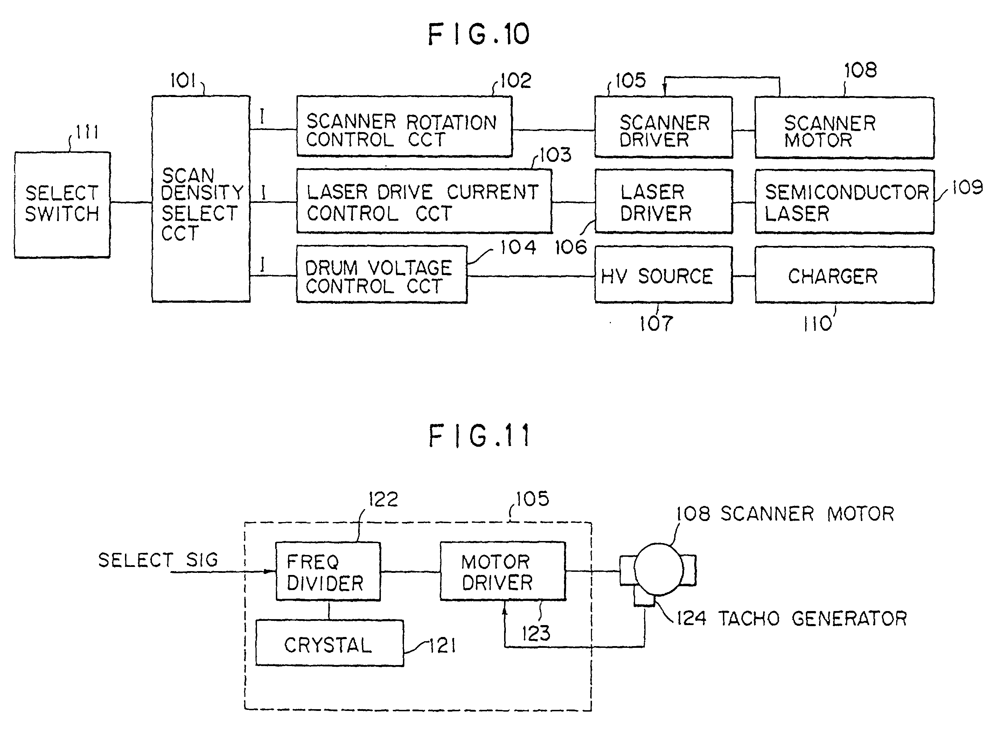

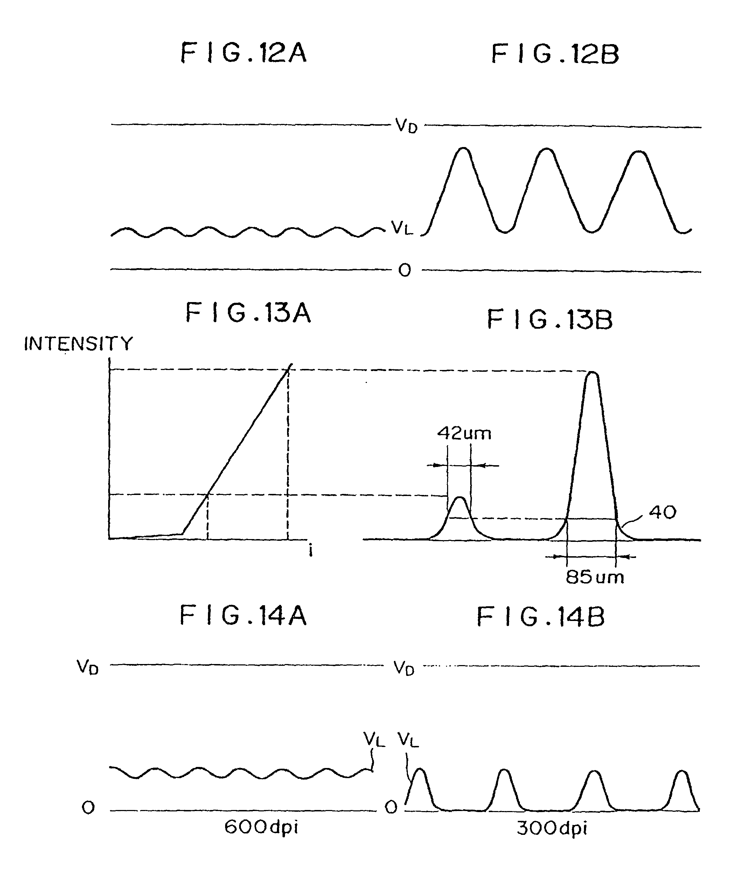

Note that the same reference numerals in Fig. 12 denote the same parts as in the arrangement shown in Fig. 10 and a repetitive description will be omitted.

A laser printer of this embodiment has a printing density of 600 dpi. On the basis of a number-of-lines designating command from a host computer, a number-of-lines controller 225 outputs a number-of-lines designating signal to a dither pattern select circuit 241 and an image data correcting controller 226.

If the designated number of lines is one of 300, 200, 150, 120,..., the dither pattern select circuit 241 selects one of 2 x 2, 3 x 3, 4 x 4, 5 x 5,... dither matrix patterns from a dither pattern generating circuit 242, and supplies its output b to a comparator 243.

. The image data correcting controller 226 selects a D/D-conversion table capable of performing optimal density correction with respect to the designated number of lines (i.e., the selected dither matrix pattern) from a D/D conversion process circuit 244, and supplies image data a which is subjected to optimal density correction based on the selected table to the comparator 243.

The comparator 243 supplies a "1"-level output to a laser driver 206 when the image data a ≧ output b; supplies a "0"-level output when the image data a < output b.

When the dither method is applied to a halftone image expression, since the dither matrix pattern can only take a given value, the numbers of lines capable of being output are restricted to some extent. For example, when the designated number of lines is one of 300, 200, 150, 120,..., an output based on the designated number of lines can be obtained. However, when the designated number of lines is 270, 220, or the like, an output based on 300 or 200 lines approximate thereto is used for the designated number of lines. When the dither method is used, the number of lines of an output image may be one approximate to the designated number of lines. However, like in this embodiment, printer output characteristics are subjected to optimal data correction in correspondence with the number of lines, thus obtaining a high-quality halftone image in the designated number of lines.

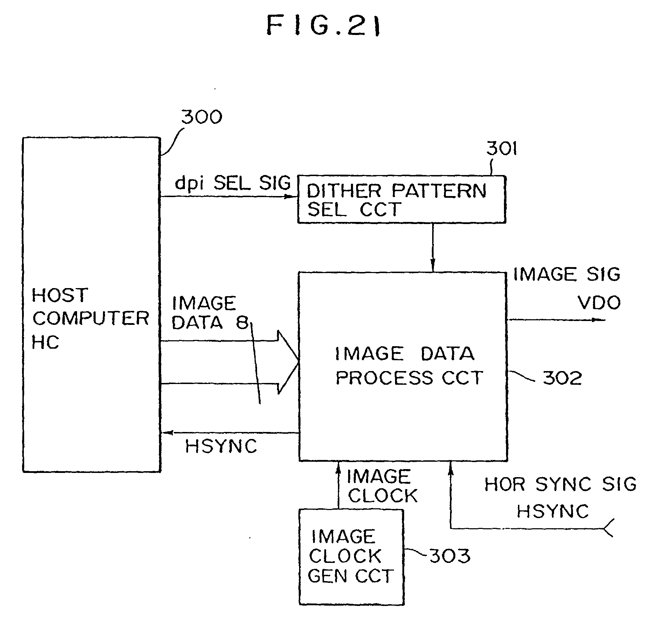

Fig. 21 is a block diagram showing an embodiment of the present invention.

A printer apparatus of this embodiment has a dither pattern select circuit 301, an image data process circuit 302, and an image clock generating circuit 303. Image data supplied from a host computer 300 is dither-processed to generate a halftone image.

The host computer 300 outputs 8-bit image data to the printer apparatus at a predetermined timing on the basis of a horizontal sync signal HSYNC from the printer apparatus.

The dither pattern select circuit 301 selects a dither matrix suitable for a selected printing density from dither matrices stored in an internal ROM on the basis of a signal for designating a printing density sent from the host computer 300 (to be referred to as a dpi select signal hereinafter), and supplies the selected pattern to the image data process circuit 302.

Fig. 22 is a block diagram showing an arrangement of the image data process circuit 302.

The image data process circuit 302 comprises an internal RAM 321, a comparison data selector 322, and a digital comparator 323. The circuit 302 stores the dither matrix sent from the dither pattern select circuit 301 in the RAM 321, and after 8-bit image data is input, performs dither processing to convert the image data into a 2-bit image signal. The circuit 302 then supplies the image signal to a printer engine (not shown).

The comparison data selector 322 comprises an address counter, and the like, and is reset in response to the horizontal sync signal. The selector 322 sequentially accesses the dither matrix in the RAM 321 in the order of the first column, second column, third column,... in synchronism with an image clock VCLK, and outputs a threshold value to the digital comparator 323. This operation is repeated in the same row until one-line scan is completed.

The digital comparator 323 compares the threshold value from the comparison data selector 322 and image data DATA from the host computer 300. The comparator 323 outputs an image signal VDO which goes to "1" level when the image data is larger than the threshold value; otherwise, goes to "0" level.

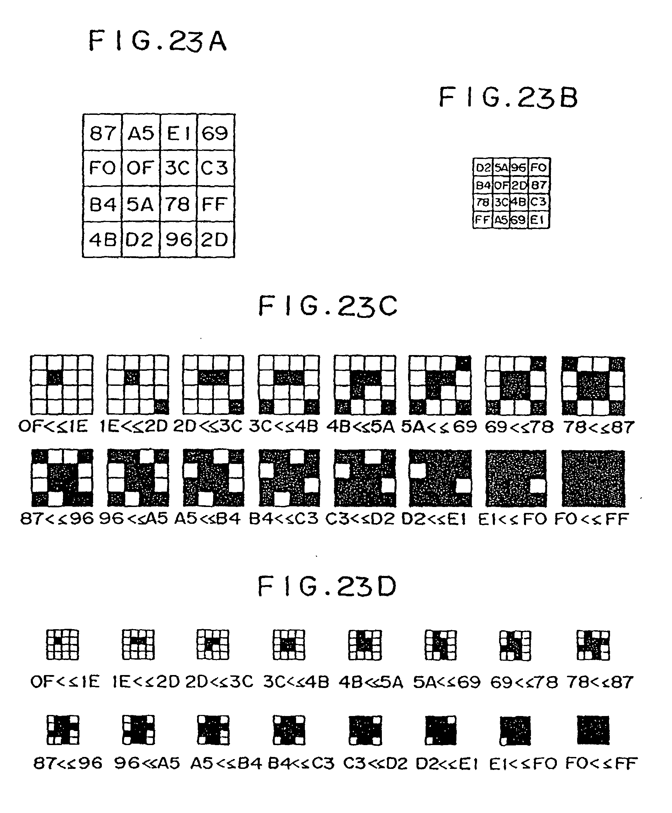

Figs. 23A and 23B show dither matrices selected by the above arrangement. Fig. 23A shows a dither matrix at a printing density of 300 dpi, and Fig. 23 B shows a dither matrix at a printing density of 600 dpi.

Both the dither matrices are 4 x 4 matrices. For the number of lines, the former matrix corresponds to 75 lines, and the latter matrix corresponds to 150 lines.

Values in each matrix are threshold values, and are compared with image data values to determine an ON/OFF state of each pixel.

Fig. 23C shows a transition state of a printing dot pattern from light tone to dark tone using the dither matrix shown in Fig. 23A. When the image data value falls within a range shown below each printing dot pattern, a print operation of the corresponding printing dot pattern is performed, thus expressing gradation.

Fig. 23D shows a transition state of a printing dot pattern from light tone to dark tone using the dither matrix shown in Fig. 23B. In Fig. 23B, when the image data value falls within a range shown below each printing dot pattern, a print operation of the corresponding printing dot pattern is performed, thus expressing gradation.

When the printing density is 300 dpi, reproducibility is good, and a distributed type dot pattern is employed. However, when the printing density is 600 dpi, since reproducibility is not so good, a concentrated type dot pattern is employed.

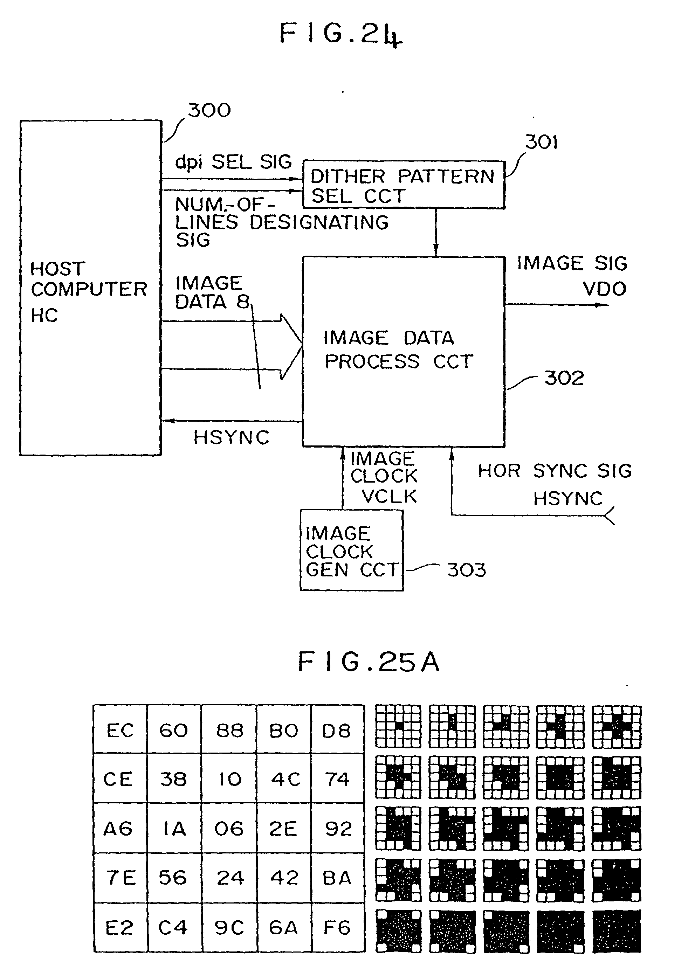

Fig. 24 is a block diagram showing another embodiment of the present invention.

In this printer apparatus, a number-of-lines designating signal is sent from a host computer 300 to a dither pattern select circuit 301 in addition to the dpi select signal in the above embodiment, and a dither matrix is selected on the basis of this signal.

For example, when the dpi select signal selects a printing density of 300 dpi, if the number-of-lines designating signal designates 60 lines, a dither pattern select circuit 301 selects a 5 x 5 concentrated type dither matrix shown in Fig. 27A.

When the dpi select signal selects a printing density of 600 dpi and the number-of-lines designating signal designates 120 lines, the dither pattern select circuit 301 selects a 5 x 5 distributed type dither matrix shown in Fig. 27B.

Furthermore, when the dpi select signal designates 600 dpi and when an image whose number of gradation levels is to be increased while the resolution need not be so high like when a landscape picture is read from an image reader, if the number-of-lines designating signal designates 60 lines, the dither pattern select circuit 301 selects a 10 x 10 dither matrix shown in Fig. 27C. Thus, the number of gradation levels becomes four times, and a more smooth image output can be obtained.

In the above embodiments, the printing density is selected from two printing densities of 300 dpi and 600 dpi. For example, the present invention may be applied to a case wherein the printing density is selected from another combination of printing densities, e.g., 400 dpi and 500 dpi, or a case wherein the printing density is selected from a combination of three or more printing densities.

The order of filling a dither matrix is not limited to the concentrated type or distributed type described above. For example, an optimal order for the model may be selected according to an exposure method (image exposure or background exposure) of the printer apparatus, a printing density, and the like.

In the above embodiments, the selected dither matrix is loaded in the RAM 321. However, a plurality of types of dither matrix may be prestored in the RAM 321, and one of the dither matrices may be selected.

## Claims

1. An image processing apparatus comprising:
means (243, 301, 302) for binarizing multi-value image data using a threshold matrix to generate binary image data representing a halftone image;
image forming means including means (4, 6) for scanning a light beam over a photosensitive body;
means (2) for modulating the light beam in accordance with said binary image data so as to generate a virtual halftone image on said photosensitive body; and
means responsive to an external command to set the resolution of said image forming means;
said binarizing means (301, 302) comprising:
means (301) storing for at least one matrix size a plurality of different types of threshold matrices (Figs. 23A, 23B, 26A and 26B); and
selecting means (301) for selecting one of the threshold matrices to be used when binarizing image data, and **characterised in that** said selecting means is adapted to select a first type of threshold matrix (Fig. 23A and 26A) of one matrix size (4x4, 5x5) in a first case where an image is to be generated with a first resolution and with a threshold matrix of said one matrix size and to select a second type of threshold matrix, different from the first type (Fig. 23B and 26B) of said one matrix size in a second case where an image is to be generated in a second resolution and with a threshold matrix of said one matrix size.

2. Apparatus according to claim 1, wherein one of the first and second types of threshold matrices is for generating distributed dot matrices and the other is for generating clustered dot matrices.

3. Apparatus according to claim 2, wherein the stored matrices include matrices of different sizes.

4. Apparatus according to claim 3 and including means (300) generating a signal for setting the number of lines of an image on said photosensitive body, and wherein said selecting means is adapted to also select a matrix on the basis of the required resolution and the line resolution of the final image.

5. Apparatus according to any preceding claim, wherein said light scanning means comprises means for deflecting light modulated in accordance with the binarised image data so that it successively scans along a fixed path; and means for moving the surface of the photosensitive body relative to said light in a direction transverse to the scan direction of the light, and wherein the scanning speed of said light can be altered in response to said external command by changing the rate at which it is reflected by said reflecting means.

6. An image processing method utilising an image processing apparatus which stores for at least one matrix size a plurality of different types of threshold matrices comprising the steps of:
binarizing multi-value image data using a threshold matrix to generate binary image data representing a halftone image;
forming an image by scanning a light beam over a photosensitive body;
modulating the light beam in accordance with said binary image data so as to generate a virtual halftone image on said photosensitive body;
responding to an external command to set the resolution of said image forming means; and
selecting one of the threshold matrices to be used when binarizing image data, and **characterised by** the steps of selecting a first type of threshold matrix (Fig. 23A and 26A) of one matrix size (4x4, 5x5) in a first case where the image is being generated with a first resolution and with a threshold matrix of said one matrix size and selecting a second type of threshold matrix, different from the first type (Fig. 23B and 26B) of said one matrix size in a second case where the image is to be generated in a second resolution and with a matrix of said one matrix size.

7. A method according to claim 6, wherein one of the first and second types of threshold matrices is for generating distributed dot matrices and the other is for generating clustered dot matrices.

8. A method according to claim 7, wherein the stored matrices include matrices of different sizes.

9. A method according to claim 8 and including the steps of generating a signal for setting the number of lines of an image on said photosensitive body, and selecting a matrix on the basis of the required resolution and the line resolution of the final image.

10. A method according to any one of preceding claims 6 to 9, wherein the light is scanned by means for deflecting light modulated in accordance with the binarised image data so that it successively scans along a fixed path, wherein the surface of the photosensitive body is moved relative to said light in a direction transverse to the scan direction of the light, and wherein the scanning speed of said light is altered in response to said external command by changing the rate at which it is reflected by said reflecting means.

## Patentansprüche

1. Bildverarbeitungsvorrichtung, mit
einer Einrichtung (243, 301, 302) zur Umwandlung von Mehrwert-Bilddaten in das Binärsystem unter Verwendung einer Schwellenwertmatrix zur Erzeugung von ein Halbtonbild darstellenden binären Bilddaten;
einer Bilderzeugungseinrichtung mit einer Einrichtung (4, 6) zur Führung eines Lichtstrahls über einen photoempfindlichen Körper;
einer Einrichtung (2) zur Modulation des Lichtstrahls gemäß den binären Bilddaten derart, dass an dem photoempfindlichen Körper ein virtuelles Halbtonbild erzeugt wird; und
einer auf einen externen Befehl ansprechenden Einrichtung zur Einstellung der Auflösung der Bilderzeugungseinrichtung;
wobei die Einrichtung zur Umwandlung in das Binärsystem (301, 302)
eine Einrichtung (301) zur Speicherung einer Vielzahl von verschiedenen Arten von Schwellenwertmatrizen (Fig. 23A, Fig. 23B, Fig. 26A, Fig. 26B) in zumindest einer Matrixgröße, und
eine Auswahleinrichtung (301) zur Auswahl einer der bei der Umwandlung von Bilddaten in das Binärsystem zu verwendenden Schwellenwertmatrizen aufweist,
**dadurch gekennzeichnet, dass**
die Auswahleinrichtung dahingehend ausgestaltet ist, eine erste Art von Schwellenwertmatrizen (vgl. Fig. 23A und Fig. 26A) mit einer Matrixgröße (4x4, 5x5) für einen ersten Fall auszuwählen, bei dem ein Bild mit einer ersten Auflösung und mit einer Schwellenwertmatrix der einen Matrixgröße zu erzeugen ist, und eine von der ersten Art (vgl. Fig. 23B und Fig. 26B) der einen Matrixgröße unterschiedliche zweite Art von Schwellenwertmatrizen für einen zweiten Fall auszuwählen, bei dem ein Bild in einer zweiten Auflösung und mit einer Schwellenwertmatrix der einen Matrixgröße zu erzeugen ist.

2. Vorrichtung nach Anspruch 1, wobei eine der ersten und zweiten Arten der Schwellenwertmatrizen zur Erzeugung von Punktverteilungsmatrizen und die andere zur Erzeugung von Punktanhäufungsmatrizen dient.

3. Vorrichtung nach Anspruch 2, wobei die gespeicherten Matrizen Matrizen unterschiedlicher Größe aufweisen.

4. Vorrichtung nach Anspruch 3, mit einer Einrichtung (300) zur Erzeugung eines Signals zur Einstellung der Zeilenanzahl eines Bildes an dem lichtempfindlichen Körper, wobei mittels der Auswahleinrichtung auch eine Matrix auf der Grundlage der erforderlichen Auflösung und der Zeilenauflösung des endgültigen Bildes auswählbar ist.

5. Vorrichtung nach zumindest einem der vorstehenden Ansprüche, wobei die Lichtabtasteinrichtung eine Einrichtung zur Ablenkung von gemäß den in das Binärsystem umgewandelten Bilddaten moduliertem Licht aufweist, so dass die Vorrichtung fortlaufend entlang eines festgelegten Wegs abtastet; und eine Einrichtung zur Bewegung der Oberfläche des lichtempfindlichen Körpers relativ zu dem Licht in einer Querrichtung zu der Abtastrichtung des Lichts aufweist, wobei die Abtastgeschwindigkeit des Lichts in Abhängigkeit von dem externen Befehl durch Änderung der Rate verändert werden kann, mit der das Licht von der Reflexionseinrichtung reflektiert wird.

6. Bildverarbeitungsverfahren, bei dem eine Bildverarbeitungsvorrichtung Verwendung findet, die für zumindest eine Matrixgröße eine Vielzahl von verschiedenen Arten von Schwellenwertmatrizen speichert, mit den Schritten:
Umwandeln von Mehrwert-Bilddaten in das Binärsystem unter Verwendung einer Schwellenwertmatrix zur Erzeugung von ein Halbtonbild darstellenden binären Bilddaten;
Erzeugen eines Bildes durch Führen eines Abtastlichtstrahls über einen lichtempfindlichen Körper;
Modulieren des Lichtstrahls gemäß den binären Bilddaten derart, dass an dem photoempfindlichen Körper ein virtuelles Halbtonbild erzeugt wird;
Ansprechen auf einen externen Befehl zur Einstellung der Auflösung der Bilderzeugungseinrichtung; und
Auswählen einer der bei der Umwandlung von Bilddaten in das Binärsystem zu verwendenden Schwellenwertmatrizen
**gekennzeichnet durch**
Auswählen einer ersten Art von Schwellenwertmatrizen (vgl. Fig. 23A und Fig. 26A) von einer Matrixgröße (4x4, 5x5) für einen ersten Fall, bei dem das Bild mit einer ersten Auflösung und mit einer Schwellenwertmatrix der einen Matrixgröße erzeugt wird, und Auswählen einer von der ersten Art (vgl. Fig. 23B und Fig. 26B) der einen Matrixgröße unterschiedlichen zweiten Art von Schwellenwertmatrizen für einen zweiten Fall, bei dem das Bild in einer zweiten Auflösung und mit einer Matrix der einen Matrixgröße zu erzeugen ist.

7. Verfahren nach Anspruch 6, wobei eine der ersten und zweiten Arten von Schwellenwertmatrizen zur Erzeugung von Punktverteilungsmatrizen und die andere zur Erzeugung von Punktanhäufungsmatrizen dient.

8. Verfahren nach Anspruch 7, wobei die gespeicherten Matrizen Matrizen unterschiedlicher Größe aufweisen.

9. Verfahren nach Anspruch 8, bei dem ein Signal zur Einstellung der Zeilenanzahl eines Bildes an dem lichtempfindlichen Körper erzeugt wird, und eine Matrix auf der Grundlage der erforderlichen Auflösung und der Zeilenauflösung des endgültigen Bildes ausgewählt wird.

10. Verfahren nach einem der Ansprüche 6 bis 9, bei dem das Licht mit einer Einrichtung zur Ablenkung von gemäß den in das Binärsystem umgewandelten Bilddaten moduliertem Licht abgetastet wird, so dass die Vorrichtung fortlaufend entlang eines festgelegten Wegs abtastet, wobei die Oberfläche des lichtempfindlichen Körpers relativ zu dem Licht in einer Querrichtung zu der Abtastrichtung des Lichts bewegt wird, und wobei die Abtastgeschwindigkeit des Lichts in Abhängigkeit von dem externen Befehl durch Änderung der Rate verändert wird, mit der das Licht von der Reflexionseinrichtung reflektiert wird.

## Revendications

1. Appareil de traitement d'images comportant :
des moyens (243, 301, 302) destinés à binariser des données d'image à valeurs multiples en utilisant une matrice à seuil pour générer des données d'image binaires représentant une image en demi-teinte ;
des moyens de formation d'image comprenant des moyens (4, 6) destinés à balayer un corps photosensible avec un faisceau lumineux ;
des moyens (2) destinés à moduler le faisceau lumineux en fonction desdites données d'image binaires afin de générer une image virtuelle en demi-teinte sur ledit corps photosensible ; et
des moyens qui, en réponse à un ordre extérieur, définissent la définition desdits moyens de formation d'image ;
lesdits moyens de binarisation (301, 302) comprenant :
un moyen (301) stockant, pour au moins une dimension de matrice, une pluralité de différents types de matrices à seuils (figures 23A ,23B, 26A et 26B) ; et
un moyen de sélection (301) destiné à sélectionner l'une des matrices à seuils devant être utilisée lors de la binarisation de données d'image, et **caractérisé en ce que** ledit moyen de sélection est conçu pour sélectionner un premier type de matrice à seuil (23A et 26A) d'une taille de matrice (4x4, 5x5) dans un premier cas où une image doit être générée avec une première définition et avec une matrice à seuil de ladite première taille de matrice et pour sélectionner un second type de matrice à seuil, différent du premier type (figures 23B et 26B) de ladite première taille de matrice dans un second cas où une image doit être générée avec une seconde définition et avec une matrice à seuil de ladite première taille de matrice.

2. Appareil selon la revendication 1, dans lequel l'un des premier et second types de matrices à seuil est destiné à générer des matrices de points distribués et l'autre est destiné à générer des matrices de points groupés.

3. Appareil selon la revendication 2, dans lequel les matrices stockées comprennent des matrices de différentes tailles.

4. Appareil selon la revendication 3, et comprenant des moyens (300) générant un signal pour établir le nombre de lignes d'une image sur ledit corps photosensible, et dans lequel ledit moyen de sélection est conçu pour sélectionner aussi une matrice sur la base de la définition demandée et de la définition de lignes de l'image finale.

5. Appareil selon l'une quelconque des revendications précédentes, dans lequel lesdits moyens de balayage lumineux comprennent des moyens destinés à dévier une lumière modulée conformément aux données d'image binarisées afin qu'elle effectue un balayage successif suivant un trajet fixe ; et les moyens destinés à déplacer la surface du corps photosensible par rapport à ladite lumière dans une direction transversale à la direction de balayage de la lumière, et dans lequel la vitesse de balayage de ladite lumière peut être modifiée en réponse audit ordre extérieur en faisant varier le taux auquel elle est réfléchie par ledit moyen de réflexion.

6. Procédé de traitement d'images utilisant un appareil de traitement d'images qui mémorise, pour au moins une taille de matrice, plusieurs types différents de matrices à seuils, comprenant les étapes qui consistent :
à binariser des données d'image de valeurs multiples en utilisant une matrice à seuil pour générer des données d'image binaires représentant une image en demi-teinte ;
à former une image en balayant un corps photosensible avec un faisceau lumineux ;
à moduler le faisceau lumineux en fonction desdites données d'image binaires afin de générer une image virtuelle en demi-teinte sur ledit corps photosensible ;
à réagir à un ordre extérieur en établissant la définition desdits moyens de formation d'image ; et
à sélectionner l'une des matrices à seuils devant être utilisée lors de la binarisation des données d'image, et **caractérisé par** la sélection d'un premier type de matrice à seuil (figures 23A et 26A) d'une première taille de matrice (4x4, 5x5) dans un premier cas où l'image est générée avec une première définition et avec une matrice à seuil de ladite première taille de matrice, et la sélection d'un second type de matrice à seuil, différent du premier type (figures 23B et 26B) de ladite première taille de matrice, dans un second cas où l'image doit être générée dans une seconde définition et avec une matrice de ladite première taille de matrice.

7. Procédé selon la revendication 6, dans lequel l'un des premier et second types de matrices à seuils est destiné à générer les matrices à points distribués et l'autre est destiné à générer des matrices à points groupés.

8. Procédé selon la revendication 7, dans lequel les matrices mémorisées comprennent des matrices de différentes tailles.

9. Procédé selon la revendication 8 et comprenant la génération d'un signal pour établir le nombre de lignes d'une image sur ledit corps photosensible, et la sélection d'une matrice sur la base de la définition demandée et de la définition de lignes de l'image finale.

10. Procédé selon l'une quelconque des revendications précédentes 6 à 9, dans lequel la lumière effectue un balayage à l'aide d'un moyen destiné à dévier une lumière modulée conformément aux données d'image binarisées afin qu'elle effectue un balayage successif suivant un trajet fixe, dans lequel la surface du corps photosensible est déplacée par rapport à ladite lumière dans une direction transversale à la direction de balayage de la lumière, et dans lequel la vitesse de balayage de ladite lumière est modifiée en réponse audit ordre extérieur en faisant varier le taux auquel elle est réfléchie par ledit moyen réfléchissant.
